# EUROPEAN PATENT APPLICATION

(11) **EP 4 344 091 A1**
(43) Date of publication of application: **27.03.2024**
(21) Application number: 22197858.8
(22) Date of filing: 26.09.2022
(51) Int. Cl.: H04B 7/185, H04W 52/02

(54) **RECEIPT OF SATELLITE ASSISTANCE INFORMATION AT A USER EQUIPMENT CONFIGURED FOR DISCONTINUOUS OPERATION**

(71) Applicant: Nokia Technologies Oy, 02610 Espoo (FI)
(72) Inventor: FREDERIKSEN, Frank, 9270 Klarup (DK); WIGARD, Jeroen, 9270 Klarup (DK); MEDEIROS DE AMORIM, Rafhael, 9000 Aalborg (DK)
(74) Representative: Script IP Limited

(57) **Abstract**

An apparatus and method are provided for selecting system information blocks containing satellite assistance information to be read such that up-to-date satellite assistance information in order for the apparatus to maintain up to date satellite assistance information. The apparatus and method take account of the discontinuous mode of operation of the apparatus and seek to align the selected system information blocks with the operational times of the apparatus. The apparatus and method also seek to preferentially select the system information blocks closest to the end of the valid time period for the current satellite assistance information.

## Description

### TECHNOLOGICAL FIELD

Various example embodiments relate to receiving satellite assistance information at a user equipment configured for discontinuous operation,

### BACKGROUND

Low-earth orbit (LEO) satellites are increasingly used to transparently relay signals between a UE (user equipment) and a gNB on Earth, such that coverage & service can be provided to a UE far away from any terrestrial base station. The LEO satellites move about 7.5 km/s relative to Earth and furthermore operate at altitudes of 300-1500 km. The satellite periodically broadcasts information regarding its location and trajectory. This information is only valid for a limited period and so this information is transmitted along with an indication of its validity.

A UE that wants to communicate via the satellite will require an up-to-date record of this information. To maintain an up-to-date record the UE may determine when the information it has received will expire and from that when it should read updated information. Where the UE operates in a discontinuous mode to save power, then this selection of a time to read updated information becomes more complex.

Embodiments seek to select preferred times to read the required satellite information to reduce power consumption and yet provide acceptable reliability.

### BRIEF SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

According to various, but not necessarily all, embodiments of the invention there is provided an apparatus, comprising: means for controlling discontinuous operation of said apparatus, said means for controlling being configured to control said apparatus to transition between an operational mode and a low power mode; means for receiving and decoding system information, said system information comprising satellite assistance information indicative of at least one of the following: location, direction, speed of a satellite or a valid time period indicative of a time period during which at least one of said satellite assistance information is valid; means for determining broadcast times during which further system information is broadcast during said valid time period and receive opportunities where said broadcast times coincide with time periods during which said apparatus is in operational mode; means for selecting at least one of said determined receive opportunities; and means for controlling said means for receiving and decoding to receive said further system information during said selected at least one receive opportunity.

Embodiments recognise that the requirement to read the periodically broadcast satellite assistance information may be impacted by the discontinuous operation settings of the apparatus. In particular, it may be desirable in order to reduce power consumption to preferentially select the occasions where the broadcast of the information coincides with the time periods during which the apparatus is scheduled to be in an operational mode so that the apparatus does not need to transition to the operational mode in order to read the information. In order to do this, these "receive opportunities" are first identified and then one or more of them are selected as an appropriate time to read the system information.

The system information may be broadcast periodically from a satellite and may comprise Ephemeris information and include a location of the satellite and a valid time period during which this location is valid. The system information may also comprise an Epoch time that sets the start time of the valid time period.

In some example embodiments said system information may also comprise an indication of timing advances for pre-compensation of the signals, this may be based on feeder link delay (or common delay), that is the delay from the gNB to the satellite. There may also be information on how the timing between the gNB and the satellite varies over time.

The system information comprises satellite assistance information and may be broadcast within a SIB19 information block.

In some example embodiments, said means for selecting is configured to select said at least one receive opportunity as at least one of said receive opportunities that is closest to an end of said valid time period.

In some example embodiments, said means for selecting is configured to select said at least one receive opportunity as at least one of said receive opportunities that are within a predetermined time of an end of said valid time period.

In some example embodiments, the apparatus further comprises a timer, the timer being configured to control the times during which the reading and decoding means may read and decode signals. The timer may be set to a "possible for reading time period" during which reading of the system information is permitted. The means for controlling may set the timer to the predetermined time before the end of the valid time period.

In some example embodiments, said means for determining is further configured to determine an estimated number of receipts of said further information required to decode said system information and to determine whether said estimated required number of receipts is less than or equal to said number of receive opportunities.

In some example embodiments the system information may be sent in different information blocks at different times, thus the periodic transmission of the system information may involve some of the information such as the location and the valid time period being sent in one occasion and other information such as the speed of the satellite and the common delay being sent at other occasions. In such a case more than one receipt will be required to decode the information. Alternatively, and/or additionally, it may be determined that it may not always be possible to decode the received information due to for example poor channel quality and thus, it may be determined that a number of receipts are required for a predetermined decoding reliability.

In some example embodiments, said means for selecting is responsive to said means for determining indicating that said estimated required number of receipts is less than or equal to said number of receive opportunities to select an estimated required number of said receive opportunities.

In some example embodiments, said means for determining is configured in response to determining that said estimated required number of receipts is greater than said receive opportunities to determine by how much at least one operational mode might need to be extended to coincide with a broadcast time currently coinciding with a low power mode and to transmit at least one indication of at least one operational mode extension to said means for controlling discontinuous operation; said means for controlling discontinuous operation being configured to extend said at least one operational mode in response to receipt of said at least one indication from said determining means.

In some example embodiments, said means for determining is configured to determine an additional number of receive opportunities required for said receive opportunities to equal said estimated required number of receipts and to select at least one operational mode to extend in order to provide said estimated required number of additional receive opportunities, said at least one operational mode being selected in dependence upon at least one of the following: a length of time of said extension or a proximity of said additional receive opportunity to an end of said validity period.

In some example embodiments the apparatus may preferentially select the smaller lengths of time extensions and those that are closest to the end of the validity period.

In some example embodiments, said means for receiving and decoding is responsive to receipt of said further system information during said selected at least one receive opportunity and to decoding of said further system information, said further system information comprising an updated location of said satellite and an updated valid time period to determine and select receive opportunities within said updated valid time period.

In some example embodiments, said means for receiving and decoding is responsive to receipt of said further system information during said selected at least one receive opportunity and to being unable to decode said further system information, to indicate to said means for controlling discontinuous operation to control said apparatus to transition to operational mode during a time period encompassing a subsequent predetermined number of broadcast times during which said further system information is to be broadcast, wherein said predetermined number comprises an estimated required number of receipts of said further system information to allow reliable decoding of said system information.

In some example embodiments said apparatus is configured in response to said means for receiving and decoding receiving updated information providing satellite location and validity information from a network node to determine and select receive opportunities within an updated valid time period derived from said received updated information.

In some example embodiments, said determining means is configured in response to determining said current valid time period is to expire during a low power mode of operation and that an expected duration of said low power mode exceeds a subsequent valid time period determined from said further system information, not to determine or select receive opportunities during said subsequent valid time period.

In some example embodiments, said means comprise: at least one processor; and at least one memory storing instructions that, when executed by the at least one processor, cause the performance of the apparatus.

In some example embodiments, said apparatus comprises a user equipment.

According to various, but not necessarily all, embodiments of the invention there is provided: a method comprising: controlling discontinuous operation of an apparatus by controlling said apparatus to transition between an operational mode and a low power mode; receiving and decoding system information said system information comprising satellite assistance information indicative of at least one of the following: location, direction, speed of a satellite or a valid time period indicative of a time period during which at least one of said satellite assistance information is valid; determining broadcast times during which further system information is broadcast during said valid time period and receive opportunities where said broadcast times coincide with time periods during which said apparatus is in operational mode; selecting at least one of said determined receive opportunities; and receiving said further system information during said selected at least one receive opportunity.

In some example embodiments, said step of selecting comprises selecting said at least one receive opportunity as at least one of said receive opportunities that is closest to an end of said valid time period.

In some example embodiments, said step of selecting comprises selecting said at least one receive opportunity as at least one of said receive opportunities that are within a predetermined time of an end of said valid time period.

In some example embodiments, said method further comprises determining an estimated number of receipts of said further information required to decode said system information and determining whether said estimated required number of receipts is less than or equal to said number of receive opportunities.

In some example embodiments, said step of selecting responds to said step of determining indicating that said estimated required number of receipts is less than or equal to said number of receive opportunities by selecting said estimated required number of said receive opportunities.

In some example embodiments, following determining that said estimated required number of receipts is greater than said receive opportunities said method determines by how much at least one operational mode might need to be extended to coincide with a broadcast time currently coinciding with a low power mode and extends said at least one operational mode by that amount.

In some example embodiments, said method further comprises determining an additional number of receive opportunities required for said receive opportunities to equal said estimated required number of receipts and selects at least one operational mode to extend in order to provide said estimated additional required number of receive opportunities, said at least one operational mode being selected in dependence upon at least one of the following: a length of time of said extension or a proximity of said additional receive opportunity to an end of said validity period.

In some example embodiments, following receipt and decoding of said further system information, said further system information comprising an updated location of said satellite and an updated valid time period, said steps of determining and selecting are performed to determine and select receive opportunities within said updated valid time period.

In some example embodiments, when said step of receiving and decoding is unable to decode said received further system information, said method comprises transitioning said apparatus to operational mode during a time period encompassing a subsequent predetermined number of broadcast times during which said further system information is to be broadcast, said predetermined number comprising an estimated required number of receipts of said further system information to allow reliable decoding of said system information.

In some example embodiments, in response to said step of receiving and decoding receiving updated information providing satellite location and validity information from a network node, said method comprises determining and selecting receive opportunities within an updated valid time period derived from said received updated information.

In some example embodiments, when said step of determining determines that said current valid time period is to expire during a low power mode of operation and that an expected duration of said low power mode exceeds a subsequent valid time period determined from said further system information, said method comprises not determining or selecting receive opportunities during said subsequent valid time period.

According to various, but not necessarily all, embodiments of the invention there is provided an apparatus, comprising: at least one processor; and at least one memory storing instructions that when executed by the at least one processor cause the apparatus at least to: control discontinuous operation by controlling an apparatus to transition between an operational mode and a low power mode; receive and decode system information said system information comprising satellite assistance information indicative of at least one of location, direction, speed of a satellite and a valid time period indicative of a time period during which at least one of said satellite assistance information is valid; determine broadcast times during which further system information is broadcast during said valid time period and receive opportunities where said broadcast times coincide with time periods during which said apparatus is in operational mode; select at least one of said determined receive opportunities; and receive and decode system information during said selected at least one receive opportunity.

According to various, but not necessarily all, embodiments of the invention there is provided an apparatus comprising: discontinuous mode control circuitry configured to control discontinuous operation of said apparatus by controlling said apparatus to transition between an operational mode and a low power mode; receive and decode circuitry configured to receive and decode system information, said system information comprising satellite assistance information indicative of at least one of a location, direction, speed of a satellite and a valid time period indicative of a time period during which at least one of said satellite assistance information is valid; determining circuitry configured to determine broadcast times during which further system information is broadcast during said valid time period and receive opportunities where said broadcast times coincide with time periods during which said apparatus is in operational mode; selecting circuitry configured to select at least one of said determined receive opportunities; and discontinuous mode control circuitry being configured to control said receive and decode circuitry to receive said further system information during said selected at least one receive opportunity.

In some example embodiments, said select circuitry is configured to select said at least one receive opportunity as at least one of said receive opportunities that is closest to an end of said valid time period.

In some example embodiments, said select circuitry is configured to select said at least one receive opportunity as at least one of said receive opportunities that are within a predetermined time of an end of said valid time period.

In some example embodiments, said determining circuitry is configured to determine an estimated number of receipts of said further information required to decode said system information and to determine whether said estimated required number of receipts is less than or equal to said number of receive opportunities.

In some example embodiments, said select circuitry is responsive to said determining circuitry indicating that said estimated required number of receipts is less than or equal to said number of receive opportunities to select an estimated required number of said receive opportunities.

In some example embodiments, said determining circuitry is configured in response to determining that said estimated required number of receipts is greater than said receive opportunities to determine by how much at least one operational mode might need to be extended to coincide with a broadcast time currently coinciding with a low power mode and to transmit at least one indication of at least one operational mode extension to said discontinuous mode control circuitry; said discontinuous operation being configured to extend said at least one operational mode in response to receipt of said at least one indication from said determining circuitry.

In some example embodiments, said determining circuitry is configured to determine an additional number of receive opportunities required for said receive opportunities to equal said estimated required number of receipts and to select at least one operational mode to extend in order to provide said estimated required number of receive opportunities, said at least one operational mode being selected in dependence upon at least one of the following: a length of time of said extension; a proximity of said additional receive opportunity to an end of said validity period.

In some example embodiments, said determining circuitry is responsive to receipt of said further system information during said selected at least one receive opportunity and to decoding of said further system information, said further system information comprising an updated location of said satellite and an updated valid time period to determine receive opportunities within said updated valid time period.

In some example embodiments, said receive and decode circuitry is responsive to receipt of said further system information during said selected at least one receive opportunity and to being unable to decode said further system information, to indicate to said discontinuous mode circuitry to control said apparatus to transition to operational mode during a time period encompassing a subsequent predetermined number of broadcast times during which said further system information is to be broadcast, wherein said predetermined number comprises an estimated required number of receipts of said further system information to allow reliable decoding of said system information.

In some example embodiments, said determining circuitry is configured in response to said receive and decode circuitry receiving updated information providing satellite location and validity information from a network node to determine and select receive opportunities within an updated valid time period derived from said received updated information.

In some example embodiments, said determining circuitry is configured in response to determining said current valid time period is to expire during a low power mode of operation and that an expected duration of said low power mode exceeds a subsequent valid time period determined from said further system information not to determine or select receive opportunities during said subsequent valid time period.

According to various, but not necessarily all, embodiments of the invention there is provided a non-transitory computer readable medium comprising program instructions stored thereon for performing at least the following: decoding received system information said system information comprising satellite assistance information indicative of at least one of location, direction, speed of a satellite and a valid time period indicative of a time period during which at least one of said satellite assistance information is valid; determining broadcast times during which further system information is broadcast during said valid time period and receive opportunities where said broadcast times coincide with time periods during which said apparatus is in operational mode; selecting at least one of said determined receive opportunities; and controlling the receipt of said further system information during said selected at least one receive opportunity.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION

Some example embodiments will now be described with reference to the accompanying drawings in which:
FIG. 1 illustrates timings of satellite information broadcast relative to DRX timings of a user equipment;
Fig.2 illustrates a flow diagram showing steps in a method according to an example embodiment; and
Fig. 3 shows a user equipment according to an embodiment.

### DETAILED DESCRIPTION

Before discussing the example embodiments in any more detail, first an overview will be provided.

Embodiments relate to support of 5G NR (new radio) over non-terrestrial networks. In particular the use of low-earth orbit (LEO) satellites to transparently relay signals between a UE (user equipment) and a gNB on Earth, such that coverage & service can be provided to a UE far away from any terrestrial base station.

The LEO satellites move about 7.5 km/s relative to Earth and furthermore operate at altitudes of 300-1500 km. Therefore, a UE will observe fast varying propagation delay and Doppler shift, when communicating with the LEO satellite (and the gNB, which is being relayed through the satellite under the current deployment assumption which is relying on a transparent architecture).

In order to ensure proper time & frequency synchronization, the 3GPP has agreed the UE is responsible for performing pre-compensation of uplink transmissions.
Such pre-compensation is feasible, because the UE is aware of its own location, by use of GNSS (global navigation satellite system), and of the satellite's current and future position in space. The satellite position information is known as ephemeris and provided via System Information Broadcast (SIB) messages. The SIB also includes information on how the timing between the gNB and the satellite varies over time. This NTN (non-terrestrial network) specific information is included in SIB19, which to make the system function well needs to be transmitted very regularly. The user equipment may use this information to pre-compensate uplink signals in time and frequency.

Due to the fast movement of the LEO satellites the ephemeris and common TA, collectively referred to as assistance information, is not forever valid. Therefore, the 3GPP has specified that the information is complemented with a validity duration and an Epoch time. The Epoch time denotes the time by which the UE shall assume the assistance information to be valid. Since the assistance information contains time varying parameters such as Common TA descriptors and the satellite position, it is crucial that there is an exact time by which the UE can assume this to be applicable in order for the UE to establish the satellite's position in space at different time instants. This provisioning of Epoch time and valid time enables the UE to determine at which point the information is considered valid and for how long i.e. UE can start the validity timer (corresponding to the network-provided validity duration) at the indicated Epoch time.

The UE does not need to read the assistance information again as long as it has assistance information which has a valid validity timer.

Connected mode DRX (C-DRX) in 5G/LTE is introduced to improve UE battery power consumption by allowing the UE to periodically enter a low power mode or 'sleep' state (Off duration) during which PDCCH (physical downlink control channel) need not be monitored. In order to monitor PDCCH for possible downlink/uplink data, the UE is allowed to wake up periodically - operational state and stay 'awake' (On duration) for a certain amount of time before going to 'sleep' again. Additionally, the UE may be required to wake up occasionally to monitor PDCCH, this is for example to receive a possible re-transmission. Also when data transmission happens in uplink or downlink the on duration can be extended.

The gNodeB configures UE with a set of C-DRX parameters. These DRX parameters are selected based on the application type such that power and resource savings are maximized or at least increased. When C-DRX is enabled, the UE battery power consumption is reduced but this will increase latency. This is because, there might be an extended delay in receiving data as, the UE may be in DRX Sleep state at the time of data arrival at the gNodeB, and the gNodeB would have to wait until the UE becomes active. The latency increases with DRX cycle length, i.e., the longer the DRX cycle length, the higher the latency is. So, the DRX parameters must be carefully selected such that there is a balance between packet delay and power saving.

Embodiments recognised that the requirement to read the periodically broadcast SIB19 blocks may be impacted by the DRX settings, and embodiments seek to optimise or at least reduce the UE power consumption by considering the SIB19 reading in combination with DRX settings and UE transmissions while also seeking to ensure the UE always has valid assistance information.

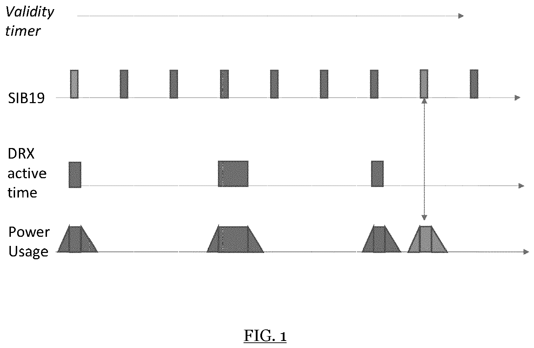

If these factors are not considered together, more power than needed can be used. This is illustrated in the example shown in Figure 1:
The SIB19 row shows the SIB19 occasions. It is assumed that the UE reads the first SIB19 in the figure (on the left hand side). At that time the validity timer is started. The validity timer expires at the end of the time period for which the data read in the SIB19 is valid.

The DRX active time shows the occasion where the UE is awake (on duration). The durations are different as there may be data transmission which extends the on period.

The bottom line shows the power usage in the UE which is directly related to the on duration. There is added a ramp up and ramp down of power before and after every on duration.

Now a simple rule to minimise the number of SIB19 readings while ensuring a valid SIB19 is always available would be for the UE to read the last SIB19 before the validity timer expires. In the example below the UE would have to wake up for that, this is shown in different shading in the power usage and this would lead to a higher power consumption.

A further thing to consider when determining which SIB19 blocks should be read to ensure valid satellite information is retained is that more than one SIB19 block may be required to attain the required information, this may be due to the required information being sent in several blocks and/or to difficulty in reading/decoding the information so that more than one block is required to ensure reliable reading of the information.

Embodiments seek to address this in the following manner:
In embodiments, the UE calculates the occasions where the SIB19 transmission and DRX active time matches within the currently running validity timer. The number of "on active" matches with SIB19 reception is given by X, and these occasions are referred as O1, O2, ... Ox.

The UE compares the number of matches, X, with the number of occasions required to obtain reliable and complete information, Y. The number of occasions might be greater than 1, in certain scenarios, such as:
a. The SIB content may be split over multiple SIB transmissions
b. SIB repetitions (loT scenarios)
c. For reliability reasons it is desired to read a certain SIB more than once.

If the number of matches is not sufficient to fulfil the criteria i.e., X<Y, then the UE may recalculate a new value for X, based on an extension of the active timers.
a. If the SIB19 is coming right after (within a given margin) the DRX active time stops, the extension to the DRX active time may be selected to include that SIB reading.
b. The UE may consider the "on active time" as the "on active time" + the extension caused by potentially incoming inactivity timer triggers. The inactivity timer specifies the time (number of PSCCH subframes) for which the UE should be active after successfully decoding a PDDCH indicating a new transmission.

If X≥ Y,
a. The UE selects at least Y occasions for listening to the SIB19 transmissions during on active windows.
b. The UE may introduce a criteria to select the latest Y occasions in time between O1, O2,...Ox; or
c. The UE may have a time, called "possible_for_reading_time", which corresponds to the last part of the validity timer. This timer is there to avoid that the user does not read SIB19 before this timer is started and thereby saves energy.

The UE then chooses to attempt the reading during the last X of the Oi occasions SIB19 provided this is within the possible_for_reading_time and restarts the assistance information including updating and restarting the validity timer at the related epoch time.

If X< Y, or if the UE fails to acquire SIB19 during any of the chosen reading occasions, the UE may select the next N SIB19 reception occasions - regardless of DRX status - and wake up the UE for reading them until a valid SIB19 information is acquired at the UE side.

If a UE is provided the content of SIB19 in a UE dedicated manner (through RRC signalling), the UE may need to recalculate the potential reading times based on latest received information.

In one additional embodiment, if the validity timer expirations happen at an instant the UE is "OFF" and the expected duration of the "OFF-Time" exceeds one full-window of validity timer, the UE may choose to skip the SIB19 acquisition altogether.

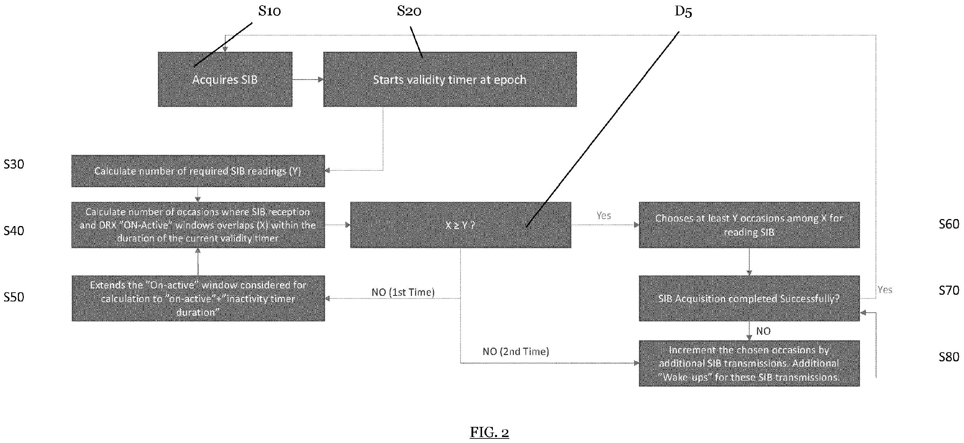

Fig. 2 shows a flow diagram illustrating steps in a method of a possible implementation of an embodiment.

In Fig.2 there is an initial step S10 where a system information block is acquired. This system information block contains ephemeris information regarding the satellite such as its location, speed, direction, Epoch time and a validity time.

At step S20 the user equipment starts the validity timer at the indicated Epoch time.

At step S30 the user equipment calculates the number of acquired SIB readings that it estimates will be needed to decode the information in the SIBs.

At step S40 the user equipment calculates the number of occasions where SIB reception coincides with DRX on active time windows that are within the duration of the current validity timer. It then determines at step D5 whether the number of times that they coincide -receive opportunities X is greater than the number of readings that it requires, if it is then at step S60 the user equipment chooses the required number of SIB readings Y from the SIB occasions that overlap with the duration of the current validity timer - receive opportunities X.

At step S70 the user equipment determines if the acquisition of this information has completed successfully if it has then it has acquired the SIB and it will return to step S1,0 if it has not then it will proceed to step S80 and will increment the selected occasions by an additional SIB transmission where available and may apply additional wake ups if there aren't any on active time windows that coincide with these additional SIB transmissions and it will do this until it has acquired the SIB successfully at step S70. It will then proceed to step S10

If it is determined that receive opportunities X are not greater than the number of SIB readings required Y at step D5, then the UE will proceed to step S50 and it will extend the on active window considered for the determination by a certain amount required to increase the number of receive opportunities X. The UE will then recalculate the number of receive opportunities X at step S40 and if it is then determined at step D5 to be greater than the number of required SIBs Y it will proceed to step S60 as outlined above.

If it is determined that the number of receive opportunities X is still less than the number of required SIBs Y at step D5 the UE will proceed to step S80 and will increment the selected occasions by an additional SIB transmission and may apply additional wake ups if there aren't any on active time windows that coincide with additional SIB transmissions and it will do this until it has acquired the SIB successfully at step S70, whereupon it will proceed to step S10.

Things to note regarding this method are the following:
The calculations may be done at the start of the validity timer or even before (as long as Epoch time is known the calculations can be performed).

Y number of required SIBs can depend on the required reliability, SIB repetitions and the case where the SIB content is spread over several SIB transmissions.

Note that the method of the flow chart can 'overwrite' the DRX settings if required for SIB reading. If no more data is expected in uplink and downlink the validity timer can just expire and the UE can return to idle/inactive mode.

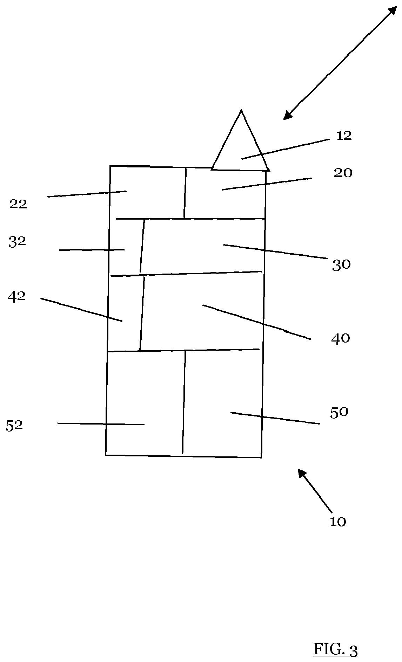

Fig 3 shows a user equipment according to an embodiment. User equipment 10 comprises an antenna 12 and receive and decoding circuitry 20. It also comprises transmitting circuitry 22. The receive and decoding circuitry 20 receive system information broadcast periodically from a satellite. This may include satellite assistance information indicative of the satellite ephemeris, a valid time period and in some cases an offset timing advance. This system information may be broadcast in system information blocks SIBs. The valid time period indicates a time period during which this information is valid, while the Epoch time in the satellite ephemeris indicates a time at which this information starts to become valid. User equipment 10 comprises a validity timer 32 that is set to the value of the valid time period and starts to count down at the Epoch time.

User equipment 10 also comprises determining circuitry 30 configured to determine broadcast times during which the system information is broadcast during the valid time period indicated in the previously received system information, that is the time period during which this previously received system information is valid. User equipment therefore should receive further system information before the validity timer 32 expires so that it can continue to communicate with the satellite.

User equipment 10 also comprises discontinuous operation mode control circuitry 52 that is configured to control the user equipment 10 to transition between an operational or wake mode and a low power or sleep mode. The determining circuitry 30 determines receive opportunities where the broadcast times of the system information coincide with the operational times of the user equipment controlled by discontinuous control circuitry 52.

UE 10 also comprises selecting circuitry 40 which selects from the available receive opportunities ones during which the system information should be read. Control circuitry 50 controls the receive and decoding circuitry 20 to receive the system information during these selected time periods. In this regard, the selecting circuitry may select the receive opportunities that are closest to the end of the valid time period such that they remain valid for longer.

In some example embodiments more than one SIB is required to be received in order to acquire the information with a desired degree of reliability. Determining circuitry 30 may determine an estimated number of SIBs required to successfully acquire the system information and control circuitry 50 may control receive and decoding circuitry 20 to receive and decode that number. This number may be dependent upon how the information is broadcast that is if the required information is broadcast in several SIBs and/or the quality of the communication or channel, a low quality making it difficult to decode and requiring some repetition to enable decoding. Selecting circuitry 40 will then select this estimated number of receive opportunities from those available. Where there are not sufficient available receive opportunities then determining circuitry 30 may determine a number of additional number of receive opportunities for said receive opportunities to equal said estimated required number of receipts and to select at least one operational mode to extend and/or a further operational mode to be triggered in order to provide said estimated required number of receive opportunities. Determining circuitry will then transmit a signal to discontinuous mode control circuitry 52 indicating the operational mode to extend or the additional operation mode to trigger.

The receive and decoding circuitry 20 will then receive and decode the information and when it has updated information then the process will start again with the updated information.

In some example embodiments, the user equipment 10 has an additional timer 42 that it sets to start running a predetermined time before the end of the valid time period to ensure that system information is not read at times that are too close to each other. In this regard, as the system information that is read has a valid time period it is preferable to renew system information when the previous system information is about to expire.

In summary, an apparatus and method are provided for selecting system information blocks containing satellite assistance information to read such that up-to-date satellite assistance information is retained. The apparatus and method take account of the discontinuous mode of operation of the apparatus and seek to align the selected system information blocks with the operational times of the apparatus. The apparatus and method also seek to preferentially select the system information blocks closest to the end of the valid time period for the current satellite assistance information as they will remain valid for longer.

In some example embodiments it may be that only one receipt is required to determine the required information, while in other embodiments it may be that several are required. In this regard, the information may be sent in different blocks at different times in which case a number of blocks of information will need to be read before the information can be decoded or at least before enough information is received for the user equipment to communicate as required. Alternatively and/or additionally, it may be that the quality of the signal received is not particularly high and more than one receipt is required to be able to decode the information.

Where the estimated required number is less than the receive opportunities then the apparatus may simply select the number of required receive opportunities towards the end of the validity time. Where however there aren't enough then it will need to generate more receive opportunities. It may do this by lengthening the time that the user equipment is in operational mode to coincide with the broadcast time of the information. The apparatus may select the operational mode times to extend in dependence upon how close they are to a broadcast time and also how close they are to the end of the valid time. In some cases additional operational modes may be generated by forcing the apparatus to transition to the operational mode.

In some example embodiments, where the system information is received and cannot be decoded then the apparatus may transition to operational mode during a time period that encompasses a subsequent one or more number of broadcast times such that further system information can be received and decoded.

In some cases, the apparatus may receive further satellite location and validity and perhaps other satellite ephemeris information from a network node for example and in response to this it may update the location information and the valid time period using this updated received information.

In some cases, the apparatus may be transitioning to low power mode before the end of the valid time and it may determine that it will not wake up again during the next valid time period and in this case it may determine not to select received opportunities during this subsequent time period as it will not be operational.

A person of skill in the art would readily recognize that steps of various above-described methods can be performed by programmed computers. Herein, some embodiments are also intended to cover program storage devices, e.g., digital data storage media, which are machine or computer readable and encode machineexecutable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods. The tern non-transitory as used herein, is a limitation of the medium itself (i.e., tangible, not a signal) as opposed to a limitation on data storage persistency (e.g. RAM vs ROM).

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus, comprising:
means for controlling discontinuous operation of said apparatus, said means for controlling being configured to control said apparatus to transition between an operational mode and a low power mode;
means for receiving and decoding system information, said system information comprising satellite assistance information indicative of at least one of the following: location, direction, speed of a satellite or a valid time period indicative of a time period during which at least one of said satellite assistance information is valid;
means for determining broadcast times during which further system information is broadcast during said valid time period and receive opportunities where said broadcast times coincide with time periods during which said apparatus is in operational mode;
means for selecting at least one of said determined receive opportunities; and
means for controlling said means for receiving and decoding to receive said further system information during said selected at least one receive opportunity.

2. An apparatus according to claim 1, wherein said means for selecting is configured to select said at least one receive opportunity as at least one of said receive opportunities that is closest to an end of said valid time period.

3. An apparatus according to claim 1 or 2, wherein said means for selecting is configured to select said at least one receive opportunity as at least one of said receive opportunities that are within a predetermined time of an end of said valid time period.

4. An apparatus according to any preceding claim, wherein said means for determining is further configured to determine an estimated number of receipts of said further information required to decode said system information and for determining whether said estimated required number of receipts is less than or equal to said number of receive opportunities.

5. An apparatus according to claim 4, wherein said means for selecting is responsive to said means for determining indicating that said estimated required number of receipts is less than or equal to said number of receive opportunities to select an estimated required number of said receive opportunities.

6. An apparatus according to claim 4 or 5, wherein said means for determining is configured in response to determining that said estimated required number of receipts is greater than said receive opportunities to determine by how much at least one operational mode might need to be extended to coincide with a broadcast time currently coinciding with a low power mode and to transmit at least one indication of at least one operational mode extension to said means for controlling discontinuous operation;
said means for controlling discontinuous operation being configured to extend said at least one operational mode in response to receipt of said at least one indication from said determining means.

7. An apparatus according to claim 6, wherein said means for determining is configured to determine an additional number of receive opportunities required for said receive opportunities to equal said estimated required number of receipts and to select at least one operational mode to extend in order to provide said estimated additional required number of receive opportunities, said at least one operational mode being selected in dependence upon at least one of the following:
a length of time of said extension; or
a proximity of said additional receive opportunity to an end of said validity period.

8. An apparatus according to any preceding claim, wherein said means for determining and said means for selecting are responsive to receipt of said further system information during said selected at least one receive opportunity and to decoding of said further system information, said further system information comprising an updated location of said satellite and an updated valid time period to determine and select receive opportunities within said updated valid time period.

9. An apparatus according to any preceding claim, wherein said means for receiving and decoding is responsive to receipt of said further system information during said selected at least one receive opportunity and to being unable to decode said further system information, to indicate to said means for controlling discontinuous operation to control said apparatus to transition to operational mode during a time period encompassing a subsequent predetermined number of broadcast times during which said further system information is to be broadcast, wherein said predetermined number comprises an estimated required number of receipts of said further system information to allow reliable decoding of said system information.

10. An apparatus according to any preceding claim, said apparatus being configured in response to said means for receiving and decoding receiving updated information providing satellite location and validity information from a network node to determine and select receive opportunities within an updated valid time period derived from said received updated information.

11. An apparatus according to any preceding claim, wherein said determining means is configured in response to determining said current valid time period is to expire during a low power mode of operation and that an expected duration of said low power mode exceeds a subsequent valid time period determined from said further system information, not to determine or select receive opportunities during said subsequent valid time period.

12. An apparatus according to any preceding claim, wherein the means comprise: at least one processor; and at least one memory storing instructions that, when executed by the at least one processor, cause the performance of the apparatus.

13. A method comprising:
controlling discontinuous operation of an apparatus by controlling said apparatus to transition between an operational mode and a low power mode;
receiving and decoding system information said system information comprising satellite assistance information indicative of at least one of the following: location, direction, speed of a satellite or a valid time period indicative of a time period during which at least one of said satellite assistance information is valid;
determining broadcast times during which further system information is broadcast during said valid time period and receive opportunities where said broadcast times coincide with time periods during which said apparatus is in operational mode;
selecting at least one of said determined receive opportunities; and
receiving said further system information during said selected at least one receive opportunity.

14. A method according to claim 13, further comprising determining an estimated number of receipts of said further information required to decode said system information and determining whether said estimated required number of receipts is less than or equal to said number of receive opportunities.

15. An apparatus, comprising:
at least one processor; and
at least one memory storing instructions that when executed by the at least one processor cause the apparatus at least to perform a method according to claim 13 or 14.

## Amended claims

### Amended claims in accordance with Rule 137(2) EPC.

1. A user equipment (10) of a non-terrestrial network, comprising:
means for controlling discontinuous operation of said user equipment, said means for controlling being configured to control said user equipment to transition between an operational mode and a low power mode;
means for receiving and decoding system information, said system information comprising satellite assistance information indicative of at least one of the following: location, direction, speed of a satellite or a valid time period indicative of a time period during which at least one of said satellite assistance information is valid;
means for determining broadcast times during which further system information is broadcast during said valid time period and receive opportunities where said broadcast times coincide with time periods during which said user equipment is in operational mode;
means for selecting at least one of said determined receive opportunities; and
means for controlling said means for receiving and decoding to receive said further system information during said selected at least one receive opportunity.

2. A user equipment according to claim 1, wherein said means for selecting is configured to select said at least one receive opportunity as at least one of said receive opportunities that is closest to an end of said valid time period.

3. A user equipment according to claim 1 or 2, wherein said means for selecting is configured to select said at least one receive opportunity as at least one of said receive opportunities that are within a predetermined time of an end of said valid time period.

4. A user equipment according to any preceding claim, wherein said means for determining is further configured to determine an estimated number of receipts of said further information required to decode said system information and for determining whether said estimated required number of receipts is less than or equal to said number of receive opportunities.

5. A user equipment according to claim 4, wherein said means for selecting is responsive to said means for determining indicating that said estimated required number of receipts is less than or equal to said number of receive opportunities to select an estimated required number of said receive opportunities.

6. A user equipment according to claim 4 or 5, wherein said means for determining is configured in response to determining that said estimated required number of receipts is greater than said receive opportunities to determine by how much at least one operational mode might need to be extended to coincide with a broadcast time currently coinciding with a low power mode and to transmit at least one indication of at least one operational mode extension to said means for controlling discontinuous operation;
said means for controlling discontinuous operation being configured to extend said at least one operational mode in response to receipt of said at least one indication from said determining means.

7. A user equipment according to claim 6, wherein said means for determining is configured to determine an additional number of receive opportunities required for said receive opportunities to equal said estimated required number of receipts and to select at least one operational mode to extend in order to provide said estimated additional required number of receive opportunities, said at least one operational mode being selected in dependence upon at least one of the following:
a length of time of said extension; or
a proximity of said additional receive opportunity to an end of said validity period.

8. A user equipment according to any preceding claim, wherein said means for determining and said means for selecting are responsive to receipt of said further system information during said selected at least one receive opportunity and to decoding of said further system information, said further system information comprising an updated location of said satellite and an updated valid time period to determine and select receive opportunities within said updated valid time period.

9. A user equipment according to any preceding claim, wherein said means for receiving and decoding is responsive to receipt of said further system information during said selected at least one receive opportunity and to being unable to decode said further system information, to indicate to said means for controlling discontinuous operation to control said user equipment to transition to operational mode during a time period encompassing a subsequent predetermined number of broadcast times during which said further system information is to be broadcast, wherein said predetermined number comprises an estimated required number of receipts of said further system information to allow reliable decoding of said system information.

10. A user equipment according to any preceding claim, said user equipment being configured in response to said means for receiving and decoding receiving updated information providing satellite location and validity information from a network node to determine and select receive opportunities within an updated valid time period derived from said received updated information.

11. A user equipment according to any preceding claim, wherein said determining means is configured in response to determining said current valid time period is to expire during a low power mode of operation and that an expected duration of said low power mode exceeds a subsequent valid time period determined from said further system information, not to determine or select receive opportunities during said subsequent valid time period.

12. A user equipment according to any preceding claim, wherein the means comprise: at least one processor; and at least one memory storing instructions that, when executed by the at least one processor, cause the performance of the user equipment.

13. A method comprising:
controlling discontinuous operation of a user equipment of a non-terrestrial network by controlling said user equipment to transition between an operational mode and a low power mode;
receiving and decoding system information said system information comprising satellite assistance information indicative of at least one of the following: location, direction, speed of a satellite or a valid time period indicative of a time period during which at least one of said satellite assistance information is valid;
determining broadcast times during which further system information is broadcast during said valid time period and receive opportunities where said broadcast times coincide with time periods during which said user equipment is in operational mode;
selecting at least one of said determined receive opportunities; and
receiving said further system information during said selected at least one receive opportunity.

14. A method according to claim 13, further comprising determining an estimated number of receipts of said further information required to decode said system information and determining whether said estimated required number of receipts is less than or equal to said number of receive opportunities.

15. A non-transitory computer readable medium comprising program instructions stored thereon for performing at least the following:
decoding received system information said system information comprising satellite assistance information indicative of at least one of location, direction, speed of a satellite and a valid time period indicative of a time period during which at least one of said satellite assistance information is valid;
determining broadcast times during which further system information is broadcast during said valid time period and receive opportunities where said broadcast times coincide with time periods during which said apparatus is in operational mode;
selecting at least one of said determined receive opportunities; and
controlling the receipt of said further system information during said selected at least one receive opportunity.
